Europäisches Patentamt

European Patent Office

Office européen des brevets

(11) Publication number: **0 325 897**
**A1**

# EUROPEAN PATENT APPLICATION

(21) Application number: 88830395.5

(22) Date of filing: 30.09.88

(51) Int. Cl.⁴: **B23B 27/04** , **B23B 27/16**

(30) Priority: **15.01.88 IT 2045288**

(43) Date of publication of application:
**02.08.89 Bulletin 89/31**

(84) Designated Contracting States:
**AT BE CH DE ES GB LI LU NL SE**

(71) Applicant: **T.E.A. TECNOLOGIE EUROPEE
AVANZATE S.p.A.**
**Strada Trossi 41**
**I-13030 Verrone (Vercelli)(IT)**

(72) Inventor: **Durando, Giorgio**
**Via I Maggio, 3**
**I-13052 Gaglianico (Vercelli)(IT)**

(74) Representative: **Righetti, Giuseppe**
**Bugnion S.p.A. Via Carlo Farini, 81**
**I-20159 Milano(IT)**

(54) Tool bit for turning tools and the like.

(57) The tool bit comprises a working portion (6) having a cutting edge (8), and a fitting portion (7) provided with two grip areas (12, 13) enabling its engagement by a clamping device being part of a bit-holder. The grip areas (12, 13) located on the opposite sides of said fitting portion, extend so as to diverge from each other away from the working portion (6) and have each a V-shaped configuration directing its apex towards the inner part of said fitting portion.

FIG1

EP 0 325 897 A1

## TOOL BIT FOR TURNING TOOLS AND THE LIKE

The present invention relates to a tool bit for turning tools and the like, of the type comprising a working portion with at least a cutting edge formed thereon which is designed to remove material from the surfaces of a workpiece and a fitting portion formed unitary with the working portion and exhibiting at least two grip areas located on its opposite sides and engageable by a locking device in the form of a clamp (hereinafter referred to as "clamping device") provided on a bit-holder to fasten said tool bit to the bit-holder.

It is known that there are turning tools essentially consisting of a so-called "bit-holder" adapted to be detachably fastened to the revolving turret of a lathe and arranged to hold, at one end thereof, a tool bit made of a high-strength metal and designed to take off material from the surfaces of a workpiece.

Once it is worn out, said tool bit can be removed from the bit-holder and replaced with a new tool bit.

Usually a tool bit is of one piece construction and is comprised of a working portion and a fitting portion. The structure of the working portion depends on the type of working to be performed and said working portion is provided with at least a cutting edge designed to act against the surfaces of the workpiece to carry out the removal of material.

The structure of the fitting portion, in turn, depends on the method used to engage the tool bit to the bit-holder.

According to one of these methods the fitting portion is provided to have at least two grip areas on its opposite sides, which grip areas are engaged by a clamping device arranged for the purpose on the bit-holder. In greater detail, said clamping device is provided with a supporting lug against which one grip area bears. A locking lever abuts against the second grip area and, upon the action of one or more threaded members, is urged against the supporting lug in order to achieve the tool bit fastening.

It is of the greatest importance that the tool bit should have a steady positioning when the turning is being carried out. To this end tool bits have been produced in which the grip areas extend so as to slightly diverge away from the working portion, in order to prevent the tool bit from sliding off the previously described clamping device. In addition, to make the tool bit steadier, the grip area resting against the support is provided to have a V-shaped conformation in cross section the apex of which is directed towards the supporting lug itself. The supporting lug matches the shape of the grip portion and therefore the area thereof against which the tool bit abuts, is provided with a groove having a V-shaped profile and designed to house said grip portion and hold it laterally by its abutment against each surface formed by said V-shaped section. Although said expedients have proved to be good, in some cases the stability of the tool bit on the bit-holder has not been found to be quite satisfactory, above all in connection with side stresses, i.e. stresses substantially directed at right angles to the longitudinal extension of the fitting portion.

In addition it has been found that, under the effect of shearing stresses, the V-shaped grip area tends to become wedged in the supporting lug and, as a result, the supporting lug is subjected to deformation and/or breakage due to the fact that the material it is made of has a lower mechanical strength than the material of the tool bit. This drawback remarkably reduces the possibility of making tools adapted to carry out cuts having a very reduced width in order to produce particular types of grooves and, above all, adapted to achieve an important reduction in the production of swarfs during parting-off workings made in series.

Under this situation it is an object of the present invention to provide a tool bit adapted to be very firmly engaged to the respective bit-holder without giving rise to anomalous stresses on the clamping device of said bit-holder.

The foregoing and further objects which will become more apparent in the course of the present description are substantially attained by a tool bit for turning tools and the like, characterized in that said grip areas extend so as to diverge from each other away from the working portion and, if the fitting portion is seen in cross section, exhibit each a V-shaped configuration directing its apex towards the inner part of said fitting portion.

Further features and advantages will best be understood from the detailed description of a preferred embodiment of a tool bit for turning tools and the like in accordance with the present invention, given hereinafter by way of non-limiting example with reference to the accompanying drawings, in which:

- Fig. 1 is an enlarged side view of a tool bit in accordance with the invention;

- Fig. 2 is a top view of the tool bit shown in Fig. 1;

- Fig. 3 is a front view of the tool bit of the invention;

- Fig. 4 is a sectional view taken along line IV-IV in Fig. 1;

- Fig. 5 is an enlarged view of the tool bit applied to a clamping device of a bit-holder partially shown;

- Fig. 6 is an interrupted view taken along line VI-VI in Fig. 5;

- Fig. 7 is a perspective view diagrammatically showing a tool provided with a tool bit in accordance with the invention while a parting-off operation is being carried out;

- Fig. 8 is a perspective view diagrammatically showing a tool provided with a tool bit according to the invention while a front groove is being made.

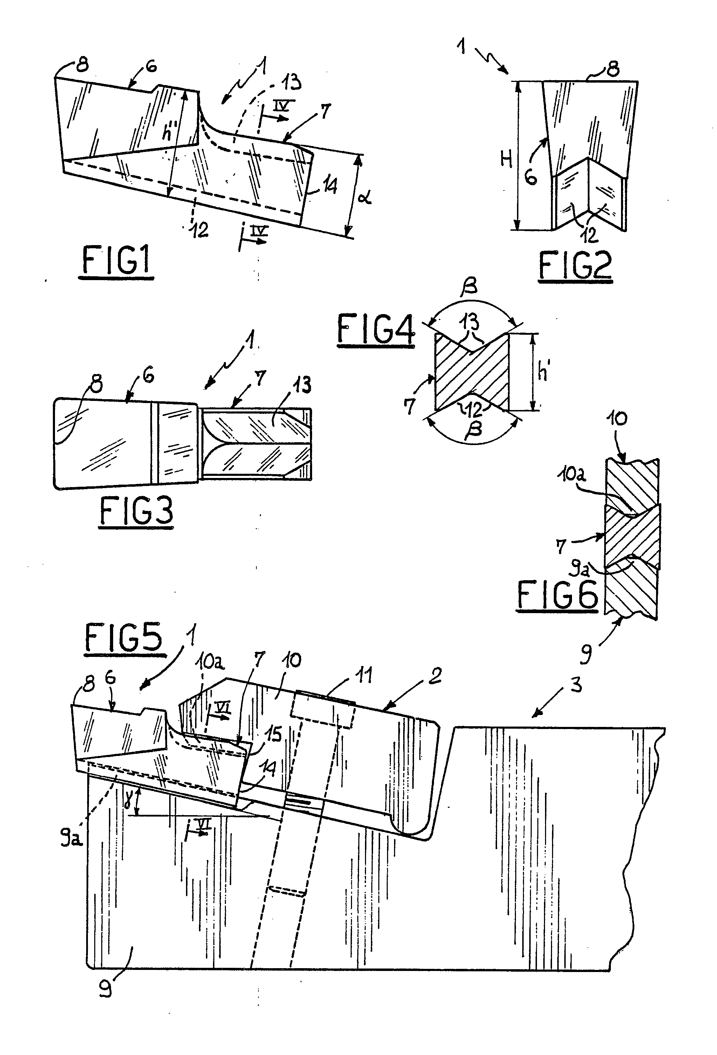

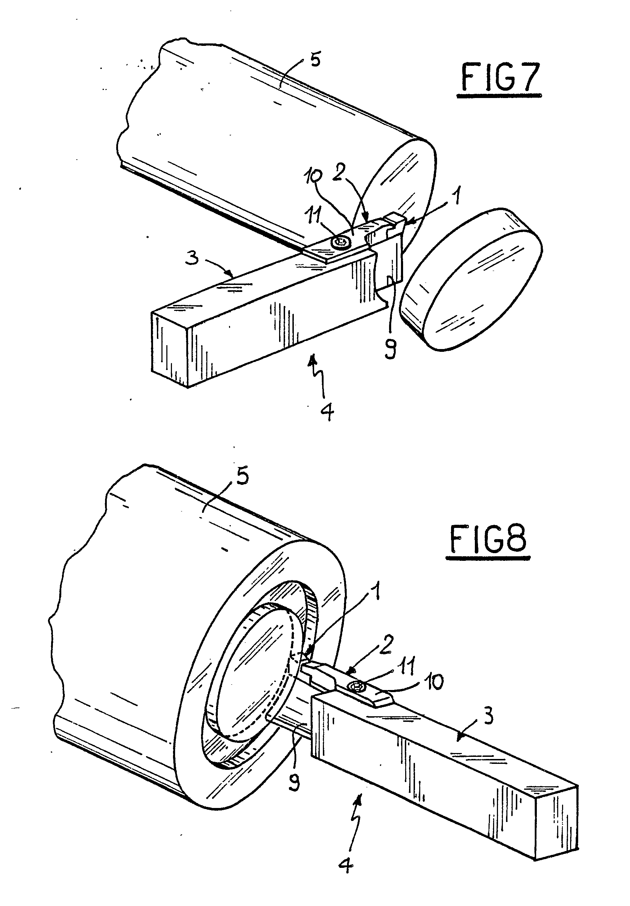

Referring to the drawings, a tool bit for turning tools and the like in accordance with present invention has been globally identified by reference numeral 1. The tool bit 1 is designed to be detachably engaged by a clamping device 2 in a bit-holder 3. In the examples shown in Figs. 7 and 8 the assembly comprising a tool bit 1 and a bit-holder 3 gives rise to a turning tool globally identified by 4. In known and conventional manner the turning tool 4 is engaged to the revolving turret of a lathe, not shown, to carry out a given working on a workpiece 5 rotated by a chuck, not shown as well as known and conventional. As clearly seen in Figs. 1, 2, 5, the tool bit 1 comprises a working portion 6 and a fitting portion 7 of one piece construction with the working portion and disposed in the extension thereof.

In a conventional manner, the shape of the working portion 6 depends on the type of working to be carried out and said portion is provided with at least a cutting edge 8 designed to execute the removal of material from a workpiece 5. In the example shown in Figs. 1, 2, 3 and 5 the working portion 6 has a shape adapted to carry out parting-off operations, as shown in Fig. 7, or make grooves, as shown in Fig. 8.

The fitting portion 7 preferably has a fitting height $h'$ lower than the maximum height $h''$ of a tool bit 1 measured close to the end of the working portion 6 directed towards said fitting portion.

In known manner, the fitting portion 7 is designed to be engaged by the clamping device 2 to achieve the fastening of the tool bit 1 to the bit-holder 3. In greater detail, the fitting portion 7 is provided to be engaged between a supporting lug 9 extending from one end of the bit-holder 3 and a locking lever 10 which, upon the action of a screw 11 or the like, is urged towards said supporting lug.

To this end the fitting portion 7 is provided of at least one grip area 12 and a second grip area 13 which abut against the supporting lug 9 and the locking lever 10 respectively. In addition, the fitting portion 7, at its end opposite that facing the working portion 6, is provided with an abutment surface 14 acting in abutment against a shoulder 15 exhibited by the locking lever 10.

Advantageously, the grip areas 12 and 13 extend so as to mutually diverge away from the working portion 6. Preferably, said grip areas 12 and 13 diverge by an angle $\alpha$ in the range of 2 to 6°.

As clearly shown in figs. 2 and 6 it is also originally provided that each grip area 12 and 13 be shaped so as to exhibit, if the fitting portion 7 is seen in cross section, a V-shaped configuration directing its apex towards the inner part of said fitting portion. Each of said "V" configurations formed by the grip areas 12, 13 is open according to an angle $\beta$ in the range of 100 to 125°, and preferably equal to 120°.

As shown in Fig. 6, the supporting lug 9 and locking lever 10 have respective locating portions 9a and 10a matching the shape of the grip areas 12 and 13 so as to be housed in recesses formed by the latter to fasten the tool bit 1 to the bit-holder 3.

When the tool bit is properly mounted on the bit-holder 3, the engagement of the locating portions 9a, 10a with the grip areas 12 and 13 ensures an excellent stability of the tool bit during the working.

In fact, as clearly seen in Fig. 5, the tool bis 1 is fixed during its lengthwise displacements by effect of the abutment of surface 14 against shoulder 15, as well as by effect of the undercut formed by angle $\alpha$ according to which the grip areas 12 and 13 diverge. In addition, the tool bit 1 appears to be firmly held sideways, due to the engagement between the locating portions 9a, 10a and the grip areas 12, 13.

Advantageously, the structure of the grip areas 12 and 13 also eliminates the risk of giving rise to anomalous stresses on the clamping device 2 and particularly on the locating portions 9a, 10a as a result of the shearing stresses tending to urge the grip areas towards said locating portions.

In this connection it is to be pointed out that matching between the locating portions 9a, 10a and the grip areas 12, 13 is accomplished in such a manner that, due to the shearing stresses, the locating portions will tend to become wedged into the grip areas. This situation which appears advantageous under the point of view of the mechanical resistance, is exactly the opposite of what happens in the known art where the fitting portion tends to become wedged in the supporting lug so as to cause the breaking of the latter. In fact, unlike what happens in the known art as far as the supporting lug is concerned, the fitting portion of the tool bit of the invention is capable of supporting the stresses resulting from the above mentioned wedging in the best manner because it is made of a material having a very high mechanical resistance.

The present invention thus attains the intended purposes.

It is also to be pointed out that the mounting stability of the tool bit 1 on the bit-holder 3 enables the tool bit to be positioned with a very reduced slant with respect to the horizontal plane. In the example shown said slant, referenced as $\gamma$, is in the range of 13°. As a result it is possible to restrict the global height H of the tool bit so that the latter willd be adapted to make front grooves having a very reduced diameter, as shown in Fig. 8.

Obviously, the present invention is susceptible of many modifications and variations, all falling within the scope of the inventive idea characterizing it.

## Claims

1. A tool bit for turning tools and the like, comprising:
- a working portion (6) with at least a cutting edge (8) formed thereon which is designed to remove material from the surfaces of a workpiece (5);
- a fitting portion (6) formed unitary with the working portion (6) and exhibiting at least two grip areas (12, 13) located on its opposite sides and engageable by a clamping device (2) provided on a bit-holder (3) to fasten said tool bit (1) to the bit-holder,
characterized in that said grip areas (12,13) extend so as to diverge from each other away from the working portion (6) and, if the fitting portion (7) is seen in cross section, they exhibit each a V-shaped configuration directing its apex towards the inner part of said fitting portion.

2. A tool bit according to claim 1, characterized in that the V-shaped configuration of each of said grip areas (12, 13) is conceived so as to form an angle in the range of 100 to 125°.

3. A tool bit according to claim 1, characterized in that said grip areas (12, 13) diverge from each other according to an angle ranging from 2 to 6°.

4. A tool bit according to claim 1, characterized in that said fitting portion (7) has a lower height than the tool bit, the height of the tool bit being measured close to the end of the working portion (6) adjacent said fitting portion.

FIG1

FIG2

FIG3

FIG4

FIG5

FIG6

FIG7

FIG8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-2 779 992 (HAYES) <br> * column 2, lines 8-63; figure 2 * | 1 | B 23 B 27/04 <br> B 23 B 27/16 |
| A | | 3,4 | |
| | --- | | |
| Y | EP-A-0 162 223 (KELLER) <br> * page 5, lines 13-26; claim 3; figures 1,2 * | 1 | |
| A | | 2 | |
| | --- | | |
| A | DE-U-8 624 281 (REIKA-WERK et al.) <br> * page 8, lines 8-15; figures 1,5,4 * | 1,2,4 | |
| | --- | | |
| A | US-A-2 062 607 (REANEY) <br> * page 2, left-hand column, line 65 - right-hand column, line 4; figures 1-4 * | 1,3,4 | |
| | --- | | |
| A | EP-A-0 152 729 (SECO TOOLS) <br> * figures 1-3 * | 1,2,4 | |
| | --- | | TECHNICAL FIELDS SEARCHED (Int. Cl.4) |
| A | DE-A-2 647 546 (HORN) <br> * page 4, lines 16-27; figure 1 * | 1,4 | |
| | --- | | B 23 B 27/00 <br> B 23 B 29/04 |
| A | EP-A-0 109 719 (COMATO) <br> * claims 1-3; page 4, line 26 - page 5, line 9; figures 4,5 * | 1 | |
| | ----- | | |

The present search report has been drawn up for all claims

| Place of search | Date of completion of the search | Examiner |
|---|---|---|
| BERLIN | 11-04-1989 | MARTIN A E W |

EPO FORM 1503 03.82 (P0401)